(19) Europäisches Patentamt / European Patent Office / Office européen des brevets

(11) **EP 2 380 791 B1**

(12) **EUROPÄISCHE PATENTSCHRIFT**

(45) Veröffentlichungstag und Bekanntmachung des Hinweises auf die Patenterteilung:
**13.07.2016   Patentblatt 2016/28**

(51) Int Cl.:
***B60T 8/1755*** *(2006.01)*

(21) Anmeldenummer: **11003394.1**

(22) Anmeldetag: **21.04.2011**

(54) **Verfahren zum Überprüfen einer Stabilität des Fahrverhaltens eines Kraftfahrzeugs und Kraftfahrzeug mit einer einem Fahrdynamikregelsystem zugeordneten Steuereinheit**

Method for testing the stability of the driving behaviour of a motor vehicle and motor vehicle with a control unit allocated to a driving dynamics management system

Procédé de vérification d'une stabilité du comportement de conduite d'un véhicule automobile et véhicule automobile doté d'une unité de commande attribuée à un système de réglage de la dynamique de conduite

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.04.2011   DE 102011016545
22.04.2010   DE 102010017831**

(43) Veröffentlichungstag der Anmeldung:
**26.10.2011   Patentblatt 2011/43**

(73) Patentinhaber: **AUDI AG
85045 Ingolstadt (DE)**

(72) Erfinder:
• **Obermüller, Anton
82549 Königsdorf (DE)**
• **Schindler, Andreas
85055 Ingolstadt (DE)**

(74) Vertreter: **Patzelt, Heike Anna Maria
AUDI AG
Patentabteilung
Postfach 11 44
74148 Neckarsulm (DE)**

(56) Entgegenhaltungen:
WO-A1-2007/113329     DE-A1- 19 919 180
DE-A1-102006 025 904     DE-A1-102007 019 698
DE-A1-102008 021 533

• **ZANTEN VAN A ET AL: "FDR - DIE FAHRDYNAMIK-REGELUNG VON BOSCH", ATZ AUTOMOBILTECHNISCHE ZEITSCHRIFT, VIEWEG PUBLISHING, WIESBADEN, DE, Bd. 96, Nr. 11, 1. November 1994 (1994-11-01), Seiten 674-678,683, XP000478694, ISSN: 0001-2785**

EP 2 380 791 B1

**EP 2 380 791 B1**

**Beschreibung**

Die Erfindung betrifft ein Verfahren zum Überprüfen einer Stabilität des Fahrverhaltens eines Kraftfahrzeugs, ein Verfahren zum Einstellen einer Fahrwerksstellgröße eines Kraftfahrzeugs sowie ein Kraftfahrzeug mit Mitteln zum Bestimmen einer Mehrzahl von eine Fahrsituation beschreibenden Größen mit zumindest einer Steuereinheit eines Fahrdynamikregelsystems, welche gegebenenfalls in eine Fahrzeugsteuerung eingreift.

Für moderne Kraftfahrzeuge ist es bekannt Fahrwerkregelungssysteme oder dergleichen einzusetzen, mittels welchen das Fahrwerk des Kraftfahrzeugs bei einer Fahrt geregelt wird, um das Fahrverhalten des Kraftfahrzeugs zu verbessern.

Dabei ist es sehr wichtig, dass das Fahrverhalten des Kraftfahrzeugs bei beziehungsweise nach einem regelnden Eingreifen des Fahrwerkregelungssystems weiterhin stabil ist. Üblicherweise wird daher die Stabilität des Fahrverhaltens des Kraftfahrzeugs ständig überprüft. Hierzu werden mit Hilfe von Modellen zum Beschreiben des Fahrverhaltens des Kraftfahrzeugs in einer Fahrsituation Werte für Größen berechnet, anhand welchen beschrieben werden kann, ob das Fahrverhalten des Fahrzeugs in einer bestimmten Fahrsituation stabil ist oder nicht. Eine derartige Größe ist beispielsweise der so genannte Schwimmwinkel des Kraftfahrzeugs, welcher den Winkel zwischen der Fahrzeuglängsmittelachse und dem Geschwindigkeitsvektor des Fahrzeugschwerpunkts bezeichnet.

Zum Überprüfen der Stabilität des Fahrverhaltens des Kraftfahrzeugs durch eine Steuereinheit des Fahrwerkregelungssystems des Kraftfahrzeugs wird üblicherweise ein lineares Einspurmodell zum Beschreiben des Lenkverhaltens des Kraftfahrzeugs genutzt. In diesem Modell werden verschiedene Vereinfachungen getroffen. Beispielsweise werden beide Räder einer Radachse des Fahrzeugs als ein einziges Rad dargestellt, welches an einer Fahrzeugmittelachse angeordnet ist. Durch derartige Modelle kann die Stabilität des Fahrverhaltens des Kraftfahrzeugs nicht genau genug überprüft werden.

Aus diesem Grund offenbart beispielsweise die DE 10 2004 006 944 A1 ein modellbasiertes Regelungsverfahren zur Fahrdynamikregelung eines mehrspurigen Fahrzeugs, bei welchem auf Basis eines erweiterten Einspurmodells eine Fahrdynamik ermittelt wird. Hierfür werden kontinuierlich während der Fahrt des Kraftfahrzeugs fahrdynamische Zustandswerte ermittelt. Durch Nutzen sowohl eines Einspurmodells als auch eines Mehrspurmodells werden dann eine vertikale Dynamik sowie eine horizontale Dynamik des Kraftfahrzeuges berechnet.

Durch das zusätzliche Verwenden des Mehrspurmodells kann die Stabilität des Fahrverhaltens dort genauer berechnet werden. Nachteilig bei diesem Verfahren ist aber, dass das Durchführen der Berechnungen beim Verwenden des Mehrspurmodells sehr zeitaufwendig ist, da durch dieses Modell ein nicht-lineares System simuliert wird. Der Rechenaufwand ist für heutzutage eingesetzte Steuereinheiten zu groß. Fahrerdynamikregelsysteme müssen aber mittels der Steuereinheiten in einer Fahrsituation rasch in die Fahrzeugsteuerung eingreifen können, um das Fahrverhalten des Kraftfahrzeugs zu verbessern.

Die DE 10 2006 025 904 A1 beschreibt ein Verfahren zur Einstellung von Fahrdynamikreglern in einem Reglerverbund in einem Kraftfahrzeug, bei dem Stabilitätsindikatoren für einen Fahrdynamikregler sowie für sämtliche Fahrdynamikregler des Verbunds ermittelt und miteinander verglichen werden, wobei im Fall einer unzulässig hohen Abweichung ein Eingriff in die Reglerstruktur durchgeführt wird. Dabei werden erste Stabilitätsindikatoren gemäß eines vorgegebenen Regler-Stabilitäts-kriteriums zur Beurteilung der Stabilität eines ersten Fahrdynamikreglers ermittelt und abgespeichert. Weiterhin werden unter Anwendung des gleichen Regler-Stabilitätskriteriums zweite Stabilitätsindikatoren zu Beurteilung der Stabilität des Reglerverbundes mit allen beteiligten Fahrdynamikreglern ermittelt und ebenfalls abgespeichert. Darauf folgend werden diese ersten und zweiten Stabilitätsindikatoren miteinander verglichen.

Es ist deshalb Aufgabe der Erfindung, ein Verfahren zum Überprüfen einer Stabilität des Fahrverhaltens eines Kraftfahrzeugs bereitzustellen, mittels welchem möglichst genau und möglichst schnell die Stabilität des Fahrverhaltens des Kraftfahrzeugs überprüft werden kann.

Diese Aufgabe wird durch ein Verfahren zum Überprüfen einer Stabilität des Fahrverhaltens eines Kraftfahrzeugs gemäß Patentanspruch 1, einem Verfahren zum Einstellen einer Fahrwerksstellgröße eines Kraftfahrzeugs gemäß Patentanspruch 6 sowie durch ein Kraftfahrzeug gemäß Patentanspruch 10 gelöst.

Die Erfindung beruht auf der Erkenntnis, dass eine Stabilität des Fahrverhaltens eines Kraftfahrzeugs in einer aktuellen Fahrsituation schneller überprüft werden kann, wenn Berechnungen, deren Ergebnisse eine Aussage über die Stabilität des Fahrverhaltens des Kraftfahrzeugs erlauben, bereits vor der Fahrt durchgeführt und in dem Kraftfahrzeug gespeichert werden, so dass zum Überprüfen der Stabilität des Fahrverhaltens in einer aktuellen Fahrsituation nur noch ein Zuordnen einer bereits durchgeführten Berechnung zu der aktuellen Fahrsituation erfolgen muss.

Das erfindungsgemäße Verfahren zum Überprüfen einer Stabilität des Fahrverhaltens eines Kraftfahrzeugs ist durch folgende Schritte gekennzeichnet:

- Vor einer Fahrt Definieren von möglichen Fahrsituationen durch Angeben von Kombinationen möglicher Werte für eine Mehrzahl von eine Fahrsituation beschreibenden Größen, welche im folgenden als Bestimmungsgrößen bezeichnet werden, wobei die Bestimmungsgrößen für eine modellbasierte Berechnung erforderliche Anfangsbedingungen sind,

- Vor der Fahrt Berechnen eines jeweiligen zeitlichen Verlaufs zumindest einer die Stabilität des Fahrverhaltens des Kraftfahrzeugs beschreibenden Größe, im folgenden als Zustandsgröße bezeichnet, für die möglichen Fahrsituationen anhand der jeweiligen Kombinationen der möglichen Werte und Speichern eines entsprechenden Datensatzes oder eines Ergebnisses einer Auswertung des Datensatzes. Beispielsweise ist es möglich, anstelle des gesamten berechneten zeitlichen Verlaufs der Zustandsgröße bestimmte, charakteristische Zeitpunkte des berechneten zeitlichen Verlaufs auszuwählen und diese zu speichern.

- Während der Fahrt Ermitteln der Werte der Bestimmungsgrößen für zumindest eine aktuelle Fahrsituation.

- Während der Fahrt Prüfen, ob die für die aktuelle Fahrsituation bestimmten jeweiligen Werte der Bestimmungsgrößen einer gespeicherten Kombination der möglichen Werte für diese Größen entsprechen.

- Während der Fahrt Zuordnen des für eine bestimmte der möglichen Fahrsituationen berechneten zeitlichen Verlaufs der zumindest einen Zustandsgröße zu der aktuellen Fahrsituation des Kraftfahrzeugs, wenn die Kombination der für die aktuelle Fahrsituation bestimmten jeweiligen Werte Bestimmungsgrößen der für die bestimmte mögliche Fahrsituation angegebenen Kombination der möglichen Werte für die Bestimmungsgrößen entspricht.

- Während der Fahrt Einstellen eines Werts mindestens einer der Bestimmungsgrößen als Stellgröße, welche einem Fahrwerk eines Kraftfahrzeugs (10) zugeordnet ist, wobei derjenige Wert als Stellgröße eingestellt wird, für den eine für eine Vielzahl von möglichen Fahrsituationen in Abhängigkeit der Bestimmungsgrößen definierte Zielfunktion, die anhand einer Mehrzahl der zeitlichen Verläufe der zumindest einen Zustandsgröße jeweils für eine Kombination der möglichen Werte für die Mehrzahl von Bestimmungsgrößen berechnet wird, extremal wird, bei Variation des Werts, der als Stellgröße eingestellt wird, unter Konstanthalten aller anderen Werte der Bestimmungsgrößen.

Da bereits vor der Fahrt mögliche Fahrsituationen jeweils als eine Art Anfangsbedingung für ebenfalls vor der Fahrt durchgeführte modellbasierte Berechnungen der Stabilität des Fahrverhaltens definiert werden, kann beim Überprüfen der Stabilität des Fahrverhaltens während der Fahrt viel Rechenzeit eingespart werden. Entscheidungen über automatische Eingriffe in die Fahrzeugsteuerung können schneller getroffen werden, so dass die Fahrt insgesamt sicherer wird. Beispielsweise können die Berechnungen vor der Fahrt mit einer Datenverarbeitungseinheit außerhalb des Kraftfahrzeugs durchgeführt werden. Eine oder mehrere zum Prüfen der Stabilität ausgelegte Steuereinheiten des Kraftfahrzeugs können daher einfacher ausgestaltet sein.

Bevorzugt wird der zeitliche Verlauf eines Schwimmwinkels des Kraftfahrzeugs und/oder der zeitliche Verlauf einer Gierrate des Kraftfahrzeugs als zeitlicher Verlauf einer Zustandsgröße berechnet. Mittels dieser beiden Größen ist die Stabilität des Fahrverhaltens des Kraftfahrzeugs sehr genau beschreibbar. Alternativ kann die Stabilität des Fahrverhaltens des Kraftfahrzeugs auch sehr gut mittels des Schwimmwinkels und der Schwimmwinkelgeschwindigkeit beschrieben werden.

Zum Berechnen der zumindest einen Zustandsgröße kann ein Zweispurmodell des Kraftfahrzeugs oder ein Fahrdynamiksimulationsmodell des Kraftfahrzeugs oder auch ein Mehrkörpermodell verwendet werden. Durch Nutzen derartiger, nicht-linearer Systeme simulierender Modelle ist ein sehr genaues Überprüfen der Stabilität des Fahrverhaltens des Kraftfahrzeugs möglich.

Man kann dann die berechneten zeitlichen Verläufe der Zustandsgröße zusammen mit der ihnen zugeordneten Kombination von Werten für die Bestimmungsgrößen vor der Fahrt in zumindest zwei unterschiedliche Gruppen einteilen. Es wird dann einfach geprüft, in welche der Gruppen die zu den aktuellen Werten der Bestimmungsgrößen entsprechende gespeicherte Kombination von möglichen Werten eingeteilt ist. Wenn die Gruppen bestimmte, festlegbare Stabilitätsbereiche des Fahrverhaltens definieren, kann die Stabilität des Fahrverhaltens einer aktuellen Fahrsituation besonders schnell überprüft werden.

Statt konkrete Werte abzulegen, kann auch eine mathematische Beziehung angegeben sein, durch welche die Werte umfasst sind.

In eine der Gruppen werden bevorzugt diejenigen berechneten zeitlichen Verläufe der Zustandsgröße eingeteilt, welche einen nicht stabilen Zustand des Fahrverhaltens des Kraftfahrzeugs beschreiben. In die wenigstens eine weitere Gruppe werden bevorzugt diejenigen berechneten zeitlichen Verläufe der Zustandsgröße eingeteilt, welche einen stabilen Zustand des Fahrverhaltens des Kraftfahrzeugs beschreiben. Wenn eine aktuelle Fahrsituation einer der beiden Gruppen zugeordnet wird, ist schnell bekannt, ob das Kraftfahrzeug ein stabiles Fahrverhalten aufweist oder nicht.

Vor der Fahrt kann anhand der berechneten Verläufe der Zustandsgröße für zumindest eine bestimmte der Bestimmungsgrößen ein Grenzwert berechnet werden. Dieser gibt für eine bestimmte Anfangsbedingung an, bei welchem Wert für diese Bestimmungsgröße der Zustand des Kraftfahrzeugs von einem stabilen Fahrverhalten des Kraftfahrzeugs zu einem nicht stabilen Fahrverhalten des Kraftfahrzeugs wechselt, wenn die übrigen Bestimmungsgrößen nicht verändert werden. Es kann dann zu jedem Zeitpunkt während einer Fahrt beispielsweise der Abstand eines aktuellen Werts für diese Bestimmungsgrößen zu dem Grenzwert bestimmt werden.

Der Grenzwert kann z. B. in einem vorliegend nicht beanspruchten Verfahren dazu genutzt werden, einen Bereich für den Zustand der Stabilität des Fahrverhaltens zu definieren, in welchem durch eine Steuereinheit eines Fahrdynamikregelsystems des Kraftfahrzeugs im Betrieb automatisch eine Fahrwerkstellgröße eingestellt wird, um das Fahrverhalten des Kraftfahrzeugs zu stabilisieren. Die Stabilität des Fahrverhaltens wird dabei mittels des erfindungsgemäßen Verfahrens überprüft. Durch geeignetes Definieren des Bereichs wird vermieden, dass die Fahrwerkstellgröße automatisch eingestellt wird, obwohl das Fahrverhalten des Kraftfahrzeugs bereits sehr stabil ist. Es wird damit verhindert, dass unnötigerweise Fahrdynamik durch weiteres Stabilisieren des Fahrverhaltens eines bereits stabil fahrenden Kraftfahrzeugs verloren geht.

Bei dem erfindungsgemäßen Verfahren zum Einstellen einer einem Fahrwerk eines Kraftfahrzeugs zugeordneten Stellgröße des Kraftfahrzeugs stellt eine Steuereinheit eines Fahrdynamikregelsystems des Kraftfahrzeugs im Betrieb die Stellgröße automatisch ein, um das Fahrverhalten des Kraftfahrzeugs zu stabilisieren, wenn eine Stabilität des Fahrverhaltens des Kraftfahrzeugs in zumindest einem bestimmten Zustand ist. Erfindungsgemäß wird das Verfahren zum Überprüfen einer Stabilität eines Fahrverhaltens eines Kraftfahrzeugs, das oben als erfindungsgemäß dargestellt wurde, eingesetzt, um den Zustand der Stabilität des Fahrverhaltens des Kraftfahrzeugs im Rahmen des Verfahrens zum Einstellen der Stellgröße zu überprüfen.

Durch diese Erfindung wird es ermöglicht, die Stellgröße auch dann zu ändern, wenn das Fahrverhalten noch nicht instabil ist. Das erfindungsgemäße Verfahren erlaubt es somit, frühzeitig einzugreifen. Dies unterscheidet es von herkömmlichen Verfahren, bei denen erst bei erkannter Instabilität des Fahrverhaltens ein Eingriff erfolgt, indem eine Stellgröße eingestellt wird.

Erfindungsgemäß wird als Stellgröße ein Wert mindestens einer Bestimmungsgröße eingestellt, wobei derjenige Wert als Stellgröße eingestellt wird, für den eine für eine Vielzahl von möglichen Fahrsituationen in Abhängigkeit der Bestimmungsgrößen definierte Zielfunktion extremal (insbesondere minimal) wird, bei Variation des Werts, der als Stellgröße eingestellt wird, unter Konstanthalten aller anderen Werte der Bestimmungsgrößen. Wenn also bei dem Verfahren nach Patentanspruch 1 der zeitliche Verlauf einer einen Zustand des Kraftfahrzeugs beschreibenden Größe für eine Vielzahl von Kombinationen möglicher Werte berechnet wurde, lässt sich die Zielfunktion anhand einer Mehrzahl von solch berechneten zeitlichen Verläufen jeweils für eine Kombination möglicher Werte berechnen, sodass man dann denjenigen Wert aussuchen kann, der extremal ist.

Bevorzugt ist hierbei die Zielfunktion derart definiert, dass das Erfordernis nach einem Aufrechterhalten oder auch Herstellen eines möglichst weit von einem instabilen Zustand entfernten stabilen Zustand des Kraftfahrzeugs einerseits und das Erfordernis nach möglichst weitgehender Umsetzung eines Fahrerwunsches (insbesondere was den Lenkwinkel angeht) andererseits in die Zielfunktion mit jeweiligen vorgebbaren Gewichtungsfaktoren eingehen. Bei geeigneter Wahl der Zielfunktion wird somit einerseits ein möglichst stabiler Zustand hergestellt, andererseits aber ist der Fahrer nicht zu sehr bevormundet, indem sein Fahrerwunsch in ungenügendem Maße umgesetzt werden würde. Vielmehr kann dam Fahrer das Gefühl vermittelt werden, dass sein Fahrerwunsch weitgehend umgesetzt wird, und dass die Fahrt gleichzeitig sehr stabil verläuft.

Bevorzugt kann unter Erweiterung dieses Aspektes die Zielfunktion auch noch so definiert sein, dass zusätzlich das Erfordernis nach möglichst schnellem (baldigem) Erreichen des stabilsten Zustands berücksichtigt wird. (Gegebenenfalls kann dieses Erfordernis auch lediglich ausschließlich in Ausgleich mit dem Erfordernis nach möglichst weitgehender Umsetzung des Fahrerwunsches gebracht werden.) Auf diese Weise ist dafür gesorgt, dass durch das Fahrzeug soweit als unter Berücksichtigung der anderen Erfordernisse möglich kurz ein nur wenig von einem instabilen Zustand entfernter Zustand (also z. B. ein teilstabiler Zustand) aufrecht erhalten wird.

Die Stellgröße kann insbesondere ein Hinterradlenkwinkel sein. Üblicherweise wird das Hinterrad durch den Fahrzeugführer nicht gelenkt, sodass im Bereich des Hinterrades ein eingreifendes Fahrdynamikregelsystem besonders wenig störend erscheint. Andererseits kann zusätzlich auch ein Überlagerungslenkwinkel, der dem vom Fahrer vorgegebenen Lenkwinkel zusätzlich aufgeprägt wird, geändert werden.

Ein erfindungsgemäßes Kraftfahrzeug weist Mittel zum Bestimmen einer Mehrzahl von Bestimmungsgrößen auf, die eine Fahrsituation beschreiben, wobei die Bestimmungsgrößen für eine modellbasierte Berechnung erforderliche Anfangsbedingungen sind. Außerdem umfasst das Kraftfahrzeug zumindest ein Fahrdynamikregelsystem, welches in einer aktuellen Fahrsituation des Kraftfahrzeugs gegebenenfalls mittels einer Steuereinheit wenigstens einen Wert einer der Bestimmungsgrößen einstellt. Durch einen Speicher dieser Steuereinheit ist ein vor der Fahrt berechneter Verlauf zumindest einer Zustandsgröße, mittels welcher di4e Stabilität des Fahrverhalten des Kraftfahrzeugs beschreibbar ist, für eine Mehrzahl von möglichen Fahrsituationen speicherbar. Gemeinsam mit diesem Verlauf ist eine jeweilige, für eine bestimmte der möglichen Fahrsituationen angegebene Kombination von Werten der Bestimmungsgrößen speicherbar. Dabei ist die Steuereinheit dazu ausgelegt, die gespeicherten Daten beim Einstellen der eine Fahrsituation des Kraftfahrzeugs beschreibenden Größe zu berücksichtigen. Vor dem automatischen Einstellen der eine Fahrsituation beschreibenden Größe durch das Fahrdynamikregelsystem kann hierdurch sehr schnell eine Stabilität des Verfahrverhaltens des Kraftfahrzeugs überprüft werden. Es ist nicht notwendig, während der Fahrt aufwendige Berechnungen durchzuführen, da die Ergebnisse der Berechnungen bereits in dem Kraftfahrzeug hinterlegt sind.

Beispielsweise kann die Steuereinheit dazu ausgelegt sein, einen Lenkwinkel des Kraftfahrzeugs einzustellen. Ein Überlagerungslenkwinkel oder auch ein Hinterradlenkwinkel kann dann schnell und sicher durch das Fahrdynamikregelsystem eingestellt werden, ohne dass das Fahrverhalten des Kraftfahrzeugs instabil wird.

Durch die Mittel zum Ermitteln von Werten der Bestimmungsgrößen können aktuelle Werte für die Größen bestimmt werden. Dabei ist die Steuereinheit dazu ausgelegt,

- diese aktuellen Werte zu empfangen,

- zu prüfen, ob jeweilige Kombinationen aus jeweiligen möglichen Werten für den durch die Steuereinheit einzustellenden Wert einer der Bestimmungsgrößen mit jeweils den übrigen, aktuell bestimmten Werten für die übrigen Bestimmungsgrößen einer für eine bestimmte mögliche Fahrsituation gespeicherten Kombination von Werten der Bestimmungsgröße entsprechen,

- jeweils eine bestimmte der jeweiligen Kombinationen einem jeweiligen berechneten zeitlichen Verlauf der zumindest einen Zustandsgröße zuzuordnen, wenn die jeweiligen Kombinationen aus den möglichen Werten für den durch die Steuereinheit einzustellenden Wert einer der Bestimmungsgrößen mit den übrigen, aktuell bestimmten Werten für die übrigen Bestimmungsgrößen einer für eine bestimmte Anfangsbedingung gespeicherten Kombination von Werten der Bestimmungsgrößen entsprechen,

- für die Stellgröße denjenigen Wert einzustellen, für den eine für eine Vielzahl von möglichen Fahrsituationen in Abhängigkeit der Bestimmungsgrößen definierte Zielfunktion extremal wird, bei Variation des Werts, der als Stellgröße einstellbar ist, unter Konstanthalten aller anderen Werte der Bestimmungsgrößen.

Für die Zielfunktion gilt das oben Gesagte mit den beschriebenen Vorteilen entsprechend.

Mittels des Speichers kann auch in einem vorliegend nicht beanspruchten Kraftfahrzeug ein Grenzwert gespeichert werden, welcher für zumindest eine bestimmte der Bestimmungsgrößen berechnet wurde. Dieser gibt für eine bestimmte Kombination von Werten der übrigen Bestimmungsgrößen an, bei welchem Wert für die Bestimmungsgröße in der Zustand des Kraftfahrzeugs von einem stabilen Fahrverhalten zu einem nicht stabilen Fahrverhalten des Kraftfahrzeugs wechselt. Es kann dann sehr einfach ein Bereich für Werte der Bestimmungsgröße mit dem Grenzwert definiert werden, in welchem durch das Fahrdynamikregelsystem keine Einstellungen mehr vorgenommen werden dürfen. Bevorzugt umfasst dieser Wertebereich Werte, welche ausreichend viel kleiner beziehungsweise ausreichend viel größer als der Grenzwert sind. Dadurch kann verhindert werden, dass durch einen Eingriff des Fahrdynamikregelsystems das Fahrverhalten des Kraftfahrzeugs eher destabilisiert als stabilisiert werden könnte, wenn das Fahrverhalten des Kraftfahrzeugs bereits sehr stabil ist. Die Fahrdynamik des Kraftfahrzeugs bleibt also erhalten.

Nachfolgend wird eine bevorzugte Ausführungsform der Erfindung unter Bezug auf die Zeichnungen beschrieben, wobei

Fig. 1              schematisch ein Kraftfahrzeug mit einem Fahrdynamikregelsystem zum Einstellen einer die Fahrsituation des Kraftfahrzeugs beschreibenden Größe veranschaulicht;

Fig. 2              eine Schrittfolge veranschaulicht, wie eine Stabilität des Fahrverhaltens eines Kraftfahrzeugs überprüfbar ist;

Fig.3              eine weitere Schrittfolge veranschaulicht, wie eine eine Fahrsituation des Kraftfahrzeugs beschreibende Größe einstellbar ist; und

Fig. 4              beispielhaft eine in einer Phasenebene visualisierte Berechnung eines zeitlichen Verlaufs eines Schwimmwinkels und einer Gierrate des Kraftfahrzeugs für eine bestimmte Fahrsituation veranschaulicht;

Fig. 5              beispielhaft eine anhand einer Darstellung nach Art von Fig. 4 erzielbare schematische Darstellung ist, wie sie einen Ist-Zustand beschreibt; und

Fig. 6 und Fig. 7 der Fig. 5     entsprechende Darstellungen sind, wie sie unter Variation einer Fahrwerkstellgröße aus der Fig. 4 entsprechenden Darstellungen bei Konstanthaltung aller übrigen Parameter erzielbar sind, wobei anhand der Fig. 5 bis 7 die in eine im Rahmen eines erfindungsgemäßen Verfahrens verwendete Zielfunktion eingehenden Größen veranschaulicht werden.

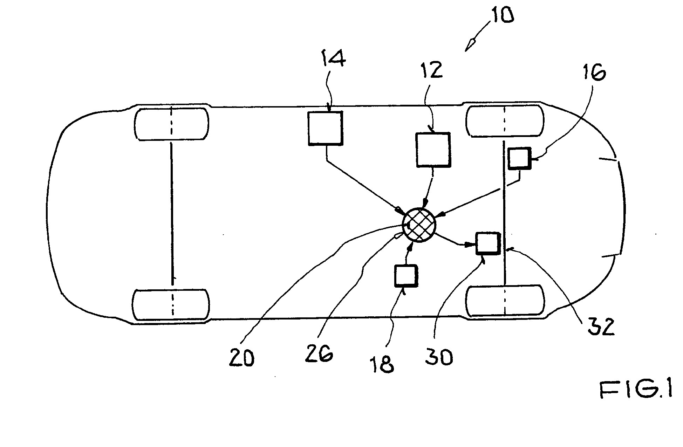

Ein in Fig. 1 dargestelltes Kraftfahrzeug 10 umfasst eine Messeinheit 12 zum Messen einer Geschwindigkeit des Kraftfahrzeugs 10, eine Messeinheit oder eine Schätzeinheit 14, zum Messen beziehungsweise zum Schätzen eines Schwimmwinkels des Kraftfahrzeugs 10, eine Messeinheit 16 zum Bestimmen eines Lenkwinkels an einer Radachse 32 des Kraftfahrzeugs 10 sowie eine Messeinheit 18 zum Messen einer Gierrate des Kraftfahrzeugs 10. Diese sind in an sich bekannter Weise ausgebildet. Zusätzlich kann das Kraftfahrzeug 10 weitere Messeinheiten umfassen, durch welche geeignete weitere Größen direkt oder auch indirekt bestimmbar sind, durch welche eine aktuelle Fahrsituation des Kraftfahrzeugs 10 beschrieben werden kann.

Das Kraftfahrzeug 10 weist auch eine Steuereinheit 20 eines Fahrwerkregelungssystems auf. Durch diese kann der Lenkwinkel bei Betrieb des Fahrdynamikregelsystems automatisch eingestellt werden, wenn das Fahrverhalten des Kraftfahrzeugs nicht sehr stabil ist, indem ein Stellmotor 30 zum Verändern des Lenkwinkel der Radachse 32 gesteuert wird.

Um die Stabilität des Fahrverhaltens des Kraftfahrzeugs 10 zu gewährleisten, wird diese während einer Fahrt ständig überprüft.

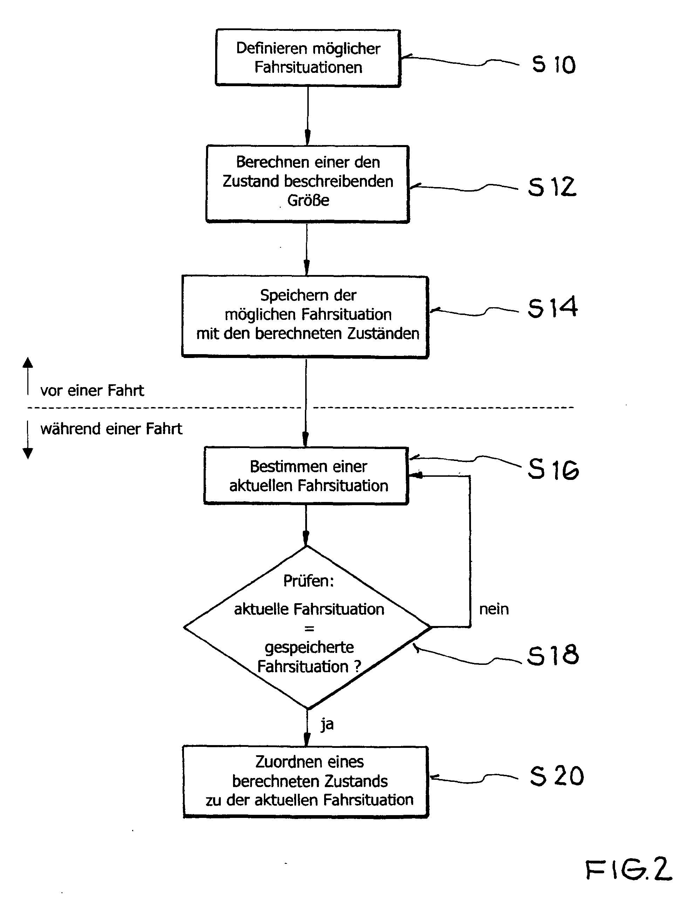

Hierfür wurden bereits vor der Fahrt des Kraftfahrzeugs 10 als Anfangsbedingungen für eine modellbasierte Berechnung mögliche Fahrsituationen, beispielsweise alle möglichen Fahrsituationen, durch Angeben möglicher Kombinationen von Werten für die Geschwindigkeit des Kraftfahrzeugs 10, die Gierrate des Kraftfahrzeugs 10, den an der Radachse 32 des Kraftfahrzeugs 10 eingestellten Lenkwinkel sowie für den Schwimmwinkel des Kraftfahrzeugs 10 definiert (Schritt S10, vergleiche Fig. 2). Für jede dieser Anfangsbedingungen wurde dann, ebenfalls vor der Fahrt des Kraftfahrzeugs 10, unter Verwenden eines Zweispurmodells der zeitliche Verlauf des Schwimmwinkels des Kraftfahrzeugs 10 und der zeitliche Verlauf der Gierrate des Kraftfahrzeugs 10 berechnet (Schritt S12). Als Schwimmwinkel wird dabei der Winkel zwischen der Fahrzeuglängsmittelachse und dem Geschwindigkeitsvektor des Fahrzeugschwerpunkts bezeichnet.

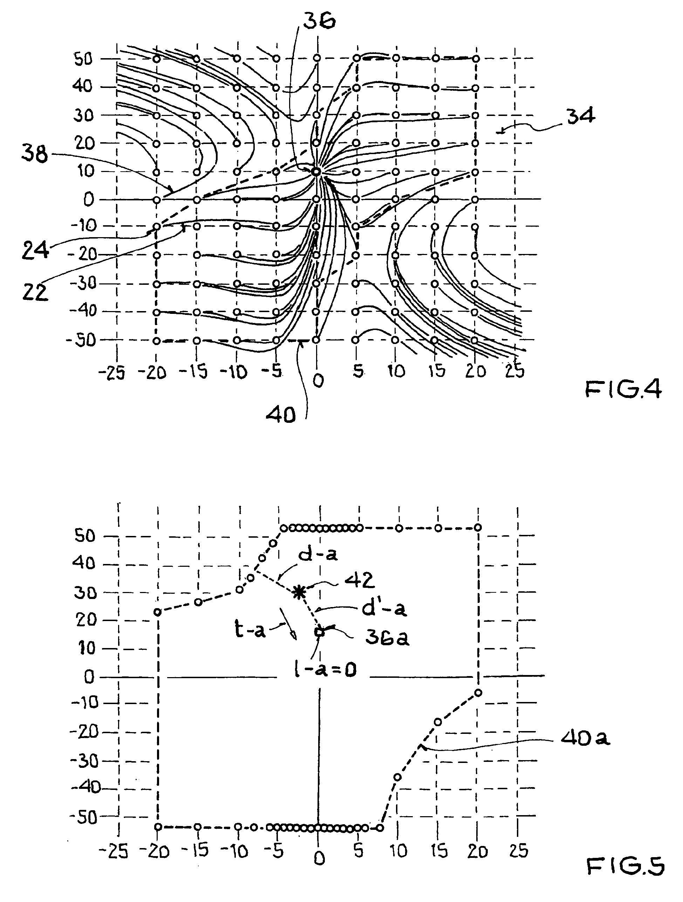

In Fig. 4 sind beispielhaft derartige Berechnungen für eine Auswahl bestimmter Kombinationen von Werten der genannten, eine Fahrsituation beschreibenden Größen durch Anwenden der Methode der Phasenebene als Kurven in einer Phasenebene 34 visualisiert. Deren Ordinate gibt dabei Werte für die Gierrate des Kraftfahrzeugs 10 an, während die Abszisse Werte für den Schwimmwinkel des Kraftfahrzeugs 10 angibt. In der Phasenebene 34 verlaufende Trajektorien ergeben sich als Lösungen der Berechnungen unter Verwendung des Zweispurmodells. Beispielhaft sei eine Trajektorie 22 betrachtet. Diese entspringt in einem Punkt 24 der Phasenebene 34. Der Punkt 24 gibt für bestimmte Anfangsbedingungen an, wie groß die Gierrate des Kraftfahrzeugs 10 und wie groß der Schwimmwinkel des Kraftfahrzeugs 10 in bei den Anfangsbedingungen zu einem Ausgangszeitpunkt $t_0$ ist. Die jeweiligen zeitlichen Verläufe der Gierrate und des Schwimmwinkels sind dann für die bestimmten Anfangsbedingungen durch den Verlauf der Trajektorie 22 in der Phasenebene 34 angegeben. Diese verläuft in dem dargestellten Beispiel bis zu einem Punkt 36 in der Nähe des Koordinatenursprungs der Phasenebene 34, zu welchem mehr Trajektorien verlaufen als zu einem beliebigen weiteren Punkt der Phasenebene 34. Das Fahrverhalten des Kraftfahrzeugs 10 in der betrachteten, bestimmten Fahrsituation ist also stabil.

Eine weitere Trajektorie 38 beschreibt für die bestimmten Anfangsbedingungen, bei welcher lediglich die Gierrate einen anderen Wert hat, den zeitlichen Verlauf der Gierrate und des Schwimmwinkels. Sie verläuft nicht bis zu dem Punkt 36 in der Nähe des Koordinatenursprungs, zu welchem mehr Trajektorien verlaufen als zu einem beliebigen weiteren Punkt der Phasenebene 34. Das Fahrverhalten des Kraftfahrzeugs 10 ist in dieser bestimmten Fahrsituation also instabil.

Die jeweils äußersten Punkte der Phasenebene 34, bei denen das Fahrverhalten des Kraftfahrzeugs 10 noch stabil ist, können durch eine Konturlinie 40 miteinander verbunden werden. Die Fig. 5 bis 7 zeigen solche Konturlinien 40a, 40b, 40c, wie sie aus unterschiedlichen Arten von Phasenebenen nach Art der Phasenebene 34 ableitbar sind. Die zugrundeliegenden Phasenebenen unterscheiden sich hierbei darin, dass eine Stellgröße, z. B. ein an ein den Hinterrädern des Kraftfahrzeugs eingestellter Lenkwinkel, variiert wird, während alle anderen, die Fahrsituation des Kraftfahrzeugs 10 beschreibenden Größen unverändert bleiben.

Vor der Fahrt werden nun alle berechneten zeitlichen Verläufe für die Gierrate und den Schwimmwinkel zusammen mit den ihnen zugeordneten jeweiligen Kombinationen von Werten für die Fahrzeuggeschwindigkeit, die Gierrate, den Lenkwinkel, sowie für den Schwimmwinkel des Kraftfahrzeugs 10 in einem Speicher 26 der Steuereinheit 20 gespeichert (Schritt S14). Alternativ zum Speichern aller einzelnen Kombinationen von Werten kann auch eine mathematische Beziehung in dem Speicher 26 hinterlegt werden. Durch diese kann beispielsweise eine Ellipse oder eine andere geometrische Figur beschrieben sein, welche in Phasenebene 34 eine Fläche umfasst, in welcher lediglich ein stabiles Fahrverhalten beschreibende Trajektorien entspringen.

Die berechneten zeitlichen Verläufe der Gierrate und des Schwimmwinkels werden beispielsweise unterteilt in zwei verschiedene Gruppen gespeichert.

Dabei zeigt der zeitliche Verlauf des Schwimmwinkels und der Gierrate bei den Berechnungen der einen Gruppe, dass das Fahrverhalten des Kraftfahrzeugs 10 in den jeweiligen bestimmten Fahrsituationen stabil ist, während der zeitliche Verlauf des Schwimmwinkels und der Gierrate bei den Berechnungen der anderen Gruppe beschreibt, dass das Fahrverhalten des Kraftfahrzeugs 10 in den jeweiligen bestimmten Fahrsituationen instabil ist.

Während der Fahrt des Kraftfahrzeugs 10 empfängt die Steuereinheit 20 laufend aktuell durch die Messeinheiten 12, 14, 16 und 18 gemessene Werte (Schritt S16).

Die Steuereinheit 20 prüft dann ebenfalls laufend während der Fahrt, ob die Kombination aktueller Werte für die Geschwindigkeit, die Gierrate, den Lenkwinkel und dem Schwimmwinkel einer hinterlegten Kombination von Werten dieser Größen entspricht (Schritt S18). Ist dies der Fall, so wird der für diese Kombination berechnete zeitliche Verlauf des Schwimmwinkels und der Gierrate der aktuellen Fahrsituation zugeordnet (Schritt S20). Hierdurch ist sehr schnell und genau eine Stabilität des Fahrverhaltens des Kraftfahrzeugs 10 überprüfbar.

In dem Speicher 26 sind für jede Kombination von Werten der Geschwindigkeit, des Schwimmwinkels und der Gierrate Grenzwerte für den Lenkwinkel gespeichert. Diese wurden ebenfalls vor der Fahrt anhand der berechneten zeitlichen Verläufe des Schwimmwinkels und der Gierrate berechnet. Diese Grenzwerte geben an, bei welchem Lenkwinkel das Fahrverhalten des Kraftfahrzeugs 10 von einem stabilen Zustand in einen instabilen Zustand übergeht. Ist die Größe des aktuellen Lenkwinkels geringer als beispielsweise 80% der Größe des Grenzwertes, so wird durch die Steuereinheit 20 des Fahrwerkregelungssystems kein neuer Lenkwinkel zum Stabilisieren des Fahrverhaltens eingestellt. Hierdurch wird verhindert, dass ein Einstellen des Lenkwinkels das Fahrverhalten des Kraftfahrzeugs 10 mit größerer Wahrscheinlichkeit eher destabilisieren als stabilisieren würde. Außerdem kann eine Stellgrößenbeschränkung besser berücksichtigt werden.

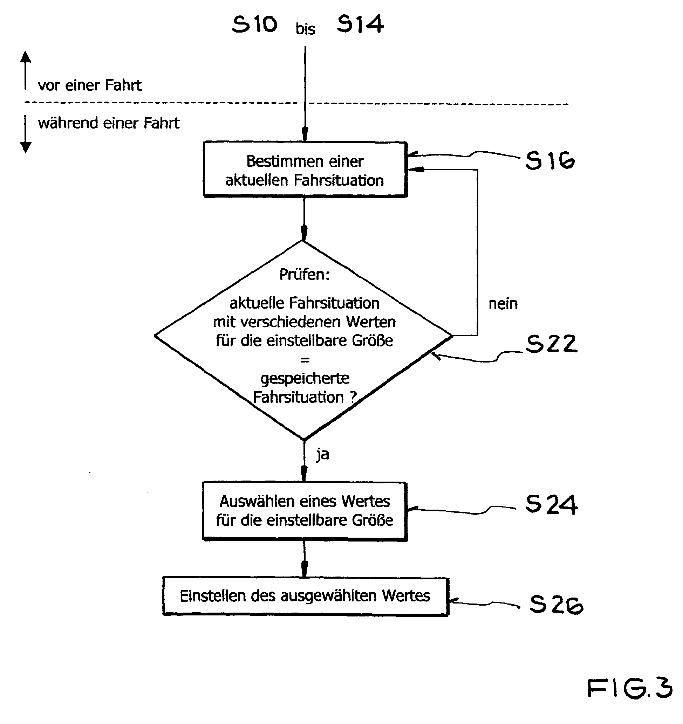

Hat der aktuelle Lenkwinkel einen anderen Wert, so wird bei Betrieb des Fahrwerkregelungssystems derjenige Lenkwinkel durch die Steuereinheit 20 eingestellt, welcher in Kombination mit den aktuell bestimmten Werten für die Geschwindigkeit, die Gierrate und den Schwimmwinkel des Kraftfahrzeugs 10 demjenigen berechneten Verlauf der Gierrate und des Schwimmwinkels zugeordnet werden kann, welcher das stabilste Fahrverhalten des Kraftfahrzeugs 10 beschreibt (vergleiche Figur 3, Schritte S22 bis S26). Auf diese Weise kann ein Destabilisieren des Fahrverhaltens des Kraftfahrzeugs 10 beim automatisches Einstellen des Lenkwinkels durch die Steuereinheit 20 sicher und einfach vermieden werden.

Es ist natürlich auch vorstellbar, dass mehrere Fahrdynamikregelsysteme in eine Fahrzeugsteuerung eingreifen. Es kann dann stets derjenige Wert für die durch das jeweilige Fahrdynamikregelsystem einzustellende Größe eingestellt werden, welcher das stabilste Fahrverhalten des Kraftfahrzeugs 10 bewirkt.

Weiterhin kann in Schritt S24 auch das vorliegend anhand der Figuren 5 bis 7 beschriebene Verfahren durchgeführt werden:

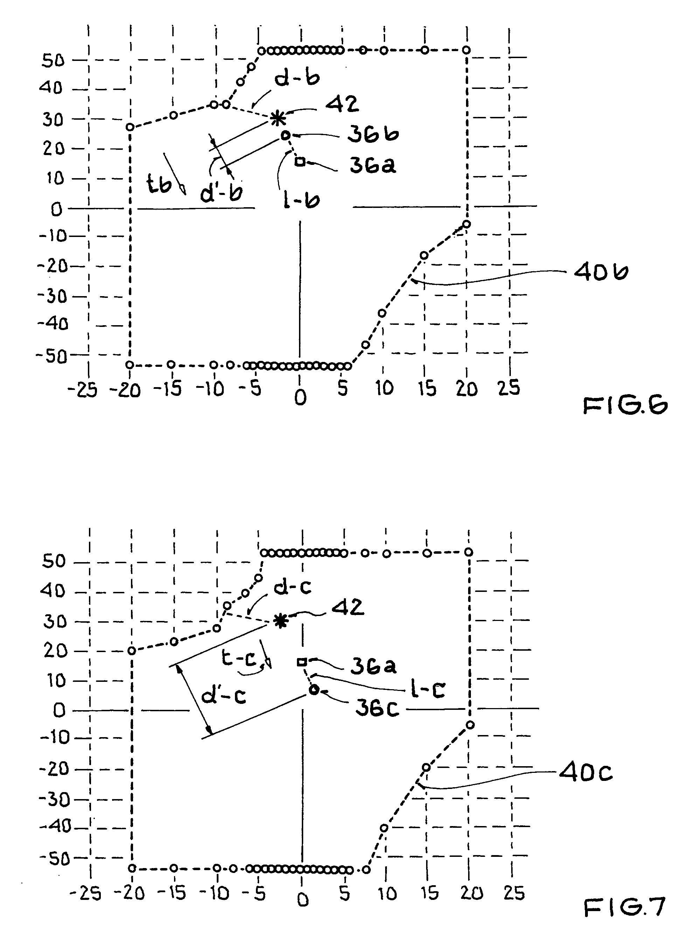

In den Fig. 5 bis 7 beschreibt der Punkt 42 die Kombination aus Schwimmwinkel und Gierrate, die gegenwärtig vorliege. Fig. 5 zeigt hierzu den Punkt 36a, auf den alle Trajektorien nach Art der anhand von Fig. 4 erläuterten Trajektorie 24 zu laufen, wenn das Fahrzeugverhalten stabil ist. Die Fig. 40a zeigt die Kontur der stabilen Punkte an. Es ist ersichtlich, dass der Punkt 42 im stabilen Bereich liegt. Der Punkt 42 hat jedoch lediglich noch einen Abstand d-a von der Kontur 40a. Zudem ist der Abstand d'-a zum Punkt 36a relativ hoch. Die Zeitdauer t-a zum Erreichen des stabilsten Punkts 36a ausgehend vom Punkt 42 ist relativ hoch. Es ist nun denkbar, dass es bei Annahme eines Hinterradlenkwinkels von Null von Fig. 5 einen von Null verschiedenen Hinterradlenkwinkel gibt, bei dem die Situation besser ist. Beispielsweise zeigt Fig. 6 die Situation bei einem nach links um fünf Grad ausgestellten Hinterradpaar, und Fig. 7 bei einem um fünf Grad nach rechts ausgestellten Hinterradpaar.

Im Vergleich zwischen Fig. 5 und Fig. 6 erkennt man, dass der Punkt 36b näher am Punkt 42 liegt als der Punkt 36a. Daher ist die t-b zum Erreichen des Punkts 36b kleiner als die Zeit t-a. Der Abstand d-b zur Kontur 40b ist auch etwas größer, wenn auch nicht sehr viel größer, als d-a. Hingegen gibt es nunmehr einen Abstand I-b zwischen den Punkten 36b und 36a. Dieser Abstand ist zu berücksichtigen, denn Ziel einer Regelung muss es sein, den Hinterradlenkwinkel letztendlich wieder auf Null Grad zurückzuführen, was dem Erreichen des Punktes 36a dauerhaft entspricht.

In Fig. 7 ist erkennbar, dass sich der Abstand d-c zum instabilen Rand 40c verringert hat, dass der Abstand d-c zum stabilsten Punkt 36c größer geworden ist, sodass die Zeitdauer t-c zum Erreichen desselben größer ist und schließlich gibt es auch noch einen Abstand I-c zwischen dem stabilsten Punkt 36c bei endlichem Hinterradlenkwinkel und 36a bei einem Hinterradlenkwinkel von Null.

Es ist somit erkennbar, dass die Situation gemäß Fig. 6 Vorteile gegenüber der Situation gemäß Fig. 5 hat: Der Abstand d-b ist gegenüber dem Abstand d-a größer, und die Zeit t-b ist kleiner als die Zeit t-a. Dies wird erkauft dadurch, dass der Hinterradlenkwinkel von Null verschieden gesetzt werden muss, sodass der Abstand zwischen den Punkten 36b und 36a zu einem späteren Zeitpunkt überwunden werden muss.

Man versucht nun, dies hier qualitativ Erklärte zu quantifizieren. Man definiert folgende Funktion:

$$Z(\varphi) = \lambda_1 / d(\varphi) + \lambda_2 \cdot t(\varphi) + \lambda_3 \cdot l(\varphi)$$

Diese Zielfunktion gibt an, dass mit einer Gewichtung mit einem Vorfaktor von $\lambda_1$ der umgekehrte Abstand $d(\varphi)$ zwischen dem jeweils gültigen Punkt (im Beispiel: 42) zur Grenze der Stabilität (im Beispiel: 40a, 40b, 40c) in die Zielfunktion eingeht, dass mit einem Gewichtungsfaktor von $\lambda_2$ die Zeitdauer zum Erreichen des jeweiligen stabilsten Punkts (im Beispiel: 36a oder 36b, 36c) eingeht, und dass mit einem Gewichtungsfaktor von $\lambda_3$ der Abstand I (in den Beispielen I-b und I-c bei I-a = 0) in die Zielfunktion eingeht.

Man sucht nun denjenigen Hinterradlenkwinkel $\varphi$, bei dem die Zielfunktion minimal wird. Die Zielfunktion kann zwar grundsätzlich nach einer Formel berechnet werden, vorliegend ist aber davon ausgegangen, dass die in den Figuren 5, 6 und 7 enthaltenen Informationen aus Schaubildern nach Art von Fig. 4 abgeleitet werden, und genauso auch für andere Hinterradlenkwinkel, sodass eine Schar von Schaubildern nach Art der Schaubilder in Fig. 5 bis 7 zur Verfügung steht und die Zielfunktion zu jedem Schaubild einzeln ermittelbar ist.

Das Minimieren der Zielfunktion Z ($\varphi$) hat somit den Sinn, das Erfordernis, sich möglichst weit im stabilen Zustand zu befinden ($d(\varphi)$ soll möglichst groß sein) und das Erfordernis nach möglichst baldigem Erreichen des stabilsten Zustands (t soll klein sein) in Ausgleich mit dem Erfordernis zu bringen, dass möglichst weitgehend dem Fahrerwunsch gefolgt wird (I soll klein sein). Wenn I nämlich zu groß ist, sind die Gierrate und/oder der Schwimmwinkel zu weit von dem entfernt, was der Fahrzeugführer vorgibt und erwartet.

Die Größen $\lambda_1$, $\lambda_2$ und $\lambda_3$ können fest vorgegeben sein bzw. bestimmte Kombinationen dieser Größen können durch den Fahrzeugführer vorgegeben werden, z. B. indem er einen bestimmten Fahrmodus wählt. So kann bei Wunsch nach einer möglichst stabilen Fahrweise $\lambda_3$ eher klein gewählt werden, $\lambda_1$, $\lambda_2$ können eher groß gewählt werden. Bei Wunsch nach einer sportlichen Fahrweise kann hingegen $\lambda_3$ eher groß gewählt werden, damit bei Minimierung der Zielfunktion eher dem Fahrerwunsch gefolgt wird.

Es wurde gezeigt, dass durch das erfindungsgemäße Verfahren die Möglichkeit besteht, das Fahrverhalten eines Kraftfahrzeugs schon dann stabil zu halten, wenn es sich, wie beim Punkt 42 in den Fig. 5, 6 und 7 gegeben, noch stabil verhält. Ein Eingriff an einer Stellgröße, im Beispiel am Hinterradlenkwinkel, kann auch schon dann erfolgen, wenn das Fahrzeug noch stabil fährt, sodass möglichst ein großer Abstand zum instabilen Bereich erhalten wird, soweit mit dem Fahrerwunsch vereinbar.


**Patentansprüche**

1. Verfahren zum Überprüfen einer Stabilität des Fahrverhaltens eines Kraftfahrzeugs (10), **gekennzeichnet durch** folgende Schritte:

   - vor einer Fahrt Definieren von möglichen Fahrsituationen **durch** Angeben von Kombinationen möglicher Werte für eine Mehrzahl von Bestimmungsgrößen, die eine Fahrsituation beschreiben (S10), wobei die Bestimmungsgrößen für eine modellbasierte Berechnung der Stabilität erforderlichen Anfangsbedingungen sind,
   - vor der Fahrt Berechnen eines zeitlichen Verlaufs zumindest einer Zustandsgröße, mittels welcher die Stabilität des Fahrverhaltens des Kraftfahrzeugs (10) beschreibbar ist, für die möglichen Fahrsituationen anhand der jeweiligen Kombinationen möglicher Werte (S12) und Speichern eines entsprechenden Datensatzes oder eines Ergebnisses einer Auswertung des Datensatzes (S14),
   - während der Fahrt Bestimmen der Werte der Bestimmungsgrößen für zumindest eine aktuelle Fahrsituation (S16),
   - während der Fahrt Prüfen, ob die für die aktuelle Fahrsituation bestimmten jeweiligen Werte der Bestimmungsgrößen einer für eine bestimmte der möglichen Fahrsituationen angegebenen Kombination der möglichen Werte für diese Bestimmungsgrößen entsprechen (S18),
   - während der Fahrt Zuordnen des berechneten zeitlichen Verlaufs der zumindest einen Zustandsgröße einer bestimmten der möglichen Fahrsituationen zu der aktuellen Fahrsituation des Kraftfahrzeugs (10), wenn die für die aktuelle Fahrsituation bestimmten jeweiligen Werte der Bestimmungsgrößen der für diese bestimmte mögliche Fahrsituation angegebenen Kombination der möglichen Werte für die Mehrzahl der Bestimmungsgrößen entsprechen (S20),
   - während der Fahrt Einstellen eines Werts mindestens einer der Bestimmungsgrößen als Stellgröße, welche einem Fahrwerk eines Kraftfahrzeugs (10) zugeordnet ist, wobei derjenige Wert als Stellgröße eingestellt wird, für den eine für eine Vielzahl von möglichen Fahrsituationen in Abhängigkeit der Bestimmungsgrößen definierte Zielfunktion, die anhand einer Mehrzahl der zeitlichen Verläufe der zumindest einen Zustandsgröße jeweils für eine Kombination der möglichen Werte für die Mehrzahl von Bestimmungsgrößen berechnet wird, extremal wird, bei Variation des Werts, der als Stellgröße eingestellt wird, unter Konstanthalten aller anderen Werte der Bestimmungsgrößen.

2. Verfahren nach Anspruch 1,
   **dadurch gekennzeichnet, dass**
   als zeitlicher Verlauf einer Zustandsgröße der zeitliche Verlauf eines Schwimmwinkels des Kraftfahrzeugs (10) und/oder der zeitliche Verlauf einer Gierrate des Kraftfahrzeugs (10) berechnet werden.

3. Verfahren nach einem der Ansprüche 1 oder 2,
   **dadurch gekennzeichnet, dass**
   die berechneten zeitlichen Verläufe der wenigstens einen Zustandsgröße mit der ihnen zugeordneten Kombination von Werten für die Bestimmungsgrößen vor der Fahrt in zumindest zwei unterschiedliche Gruppen eingeteilt werden.

4. Verfahren nach Anspruch 3,
   **dadurch gekennzeichnet, dass**
   in eine der Gruppen diejenigen berechneten zeitlichen Verläufe der zumindest einen Zustandsgröße eingeteilt werden, welche einen nicht-stabilen Zustand des Fahrverhaltens des Kraftfahrzeugs (10) beschreiben, und wobei in wenigstens eine weitere Gruppe diejenigen berechneten zeitlichen Verläufe der zumindest einen Zustandsgröße eingeteilt werden, welche einen stabilen Zustand des Fahrverhaltens des Kraftfahrzeugs (10) beschreiben.

5. Verfahren nach einem der vorhergehenden Ansprüche,
   **dadurch gekennzeichnet, dass**
   vor der Fahrt anhand der berechneten zeitlichen Verläufe für zumindest eine bestimmte der Bestimmungsgrößen ein Grenzwert berechnet wird, welcher für eine bestimmte Kombination mit den übrigen, für eine bestimmte Fahrsituation angegebenen Werten der übrigen Bestimmungsgrößen angibt, bei welchem Wert für diese bestimmte, Bestimmungsgröße in der bestimmten Kombination mit den übrigen, für die bestimmte Fahrsituation angegebenen Werten der übrigen Bestimmungsgrößen der Zustand des Kraftfahrzeugs (10) von einem stabilen Zustand in einen nicht-stabilen Zustand übergeht.

6. Verfahren zum Einstellen einer einem Fahrwerk eines Kraftfahrzeugs (10) zugeordneten Stellgröße des Kraftfahrzeugs (10), bei welchem eine Steuereinheit eines Fahrdynamikregelsystems des Kraftfahrzeugs (10) im Betrieb automatisch die Stellgröße einstellt, um das Fahrverhalten des Kraftfahrzeugs (10) zu stabilisieren, wenn eine Stabilität des Fahrverhaltens des Kraftfahrzeugs (10) in zumindest einem bestimmten Zustand ist, wobei ein Überprüfen des Zustands der Stabilität des Fahrverhaltens des Kraftfahrzeugs (10) und das Einstellen der Stellgröße in einem Verfahren gemäß einem der Ansprüche 1 bis 5 erfolgt.

7. Verfahren nach Anspruch 6,
   **dadurch gekennzeichnet, dass**
   die Zielfunktion so definiert ist, dass das Erfordernis nach einem Aufrechterhalten oder Wiederherstellen eines möglichst weit von einem instabilen Zustand entfernten Zustands des Kraftfahrzeugs und das Erfordernis nach möglichst weitgehender Umsetzung eines Fahrerwunsches in die Zielfunktion mit jeweiligen vorgebbaren Gewichtungsfaktoren eingehen.

8. Verfahren nach Anspruch 6 oder 7,
   **dadurch gekennzeichnet, dass**
   die Zielfunktion so definiert ist, dass auch das Erfordernis nach möglichst schnellem Erreichen des stabilsten Zustands berücksichtigt wird.

9. Verfahren nach einem der Ansprüche 6 bis 8,
   **dadurch gekennzeichnet, dass**
   die Stellgröße ein Hinterradlenkwinkel ist oder einen Hinterradlenkwinkel umfasst.

10. Kraftfahrzeug (10), mit Mitteln (12, 14, 16, 18) zum Bestimmen von Werten für eine Mehrzahl von Bestimmungsgrößen, die eine Fahrsituation beschreiben (S10), wobei die Bestimmungsgrößen für eine modellbasierte Berechnung einer Stabilität des Fahrverhaltens des Kraftfahrzeugs (10) erforderlichen Anfangsbedingungen sind, sowie mit zumindest einer Steuereinheit (20), welche in einer aktuellen Fahrsituation des Kraftfahrzeugs (10) wenigstens einen Wert einer der Bestimmungsgrößen als Stellgröße einstellt, wobei die Steuereinheit (20) einen Speicher (26) aufweist, durch welchen wenigstens ein vor der Fahrt berechneter zeitlicher Verlauf oder ein Ergebnisses einer Auswertung dieses berechneten zeitlichen Verlaufs zumindest einer Zustandsgröße, mittels welcher die Stabilität des Fahrverhaltens des Kraftfahrzeugs (10) beschreibbar ist, für eine Mehrzahl von möglichen Fahrsituationen sowie eine diesem zugeordnete Kombination von Werten einer Mehrzahl von Bestimmungsgrößen als Daten speicherbar sind, und wobei die Steuereinheit (20) dazu ausgelegt ist, die gespeicherten Daten beim Einstellen der Stellgröße zu berücksichtigen, wobei durch die Mittel (12, 14, 16, 18) zum Bestimmen von Werten für eine Mehrzahl von Bestimmungsgrößen, aktuelle Werte für die Bestimmungsgrößen bestimmt werden und dass die Steuereinheit (20) dazu ausgelegt ist,

- diese aktuellen Werte zu empfangen,
- zu prüfen, ob jeweilige Kombinationen aus jeweiligen möglichen Werten für den durch die Steuereinheit (20) einzustellenden Wert einer der Bestimmungsgrößen mit jeweils den übrigen, aktuellen Werten für die übrigen Bestimmungsgrößen einer für eine bestimmte mögliche Fahrsituation gespeicherten Kombination von Werten der Bestimmungsgrößen entsprechen,
- jeweils eine bestimmte der jeweiligen Kombinationen einem jeweiligen berechneten zeitlichen Verlauf der zumindest einen Zustandsgröße zuzuordnen, wenn die jeweiligen Kombinationen aus den möglichen Werten für den durch die Steuereinheit (20) einzustellenden Wert einer der Bestimmungsgrößen mit den übrigen, aktuellen Werten für die übrigen Bestimmungsgrößen für eine bestimmte mögliche Fahrsituation gespeicherten Kombination von Werten der Bestimmungsgrößen entsprechen,
- für die Stellgröße denjenigen Wert einzustellen, für den eine für eine Vielzahl von möglichen Fahrsituationen in Abhängigkeit der Bestimmungsgrößen definierte Zielfunktion, die anhand einer Mehrzahl der zeitlichen Verläufe der zumindest einen Zustandsgröße jeweils für eine Kombination der möglichen Werte für die Mehrzahl von Bestimmungsgrößen berechnet wurde, extremal wird, bei Variation des Werts, der als Stellgröße einstellbar ist, unter Konstanthalten aller anderen Werte der Bestimmungsgrößen.

## Claims

1. Process for checking the stability of driving behaviour of a motor vehicle (10), **characterised by** the following steps:

    - definition of possible driving situations prior to a journey through naming combinations of possible values for a number of parameters describing a driving situation (S10), wherein the parameters are the initial conditions required for a model-based calculation of the stability,
    - calculation of the chronological course of at least one property by means of which the stability of the vehicle (10) driving behaviour can be described prior to the journey for the possible driving situations, by means of the respective combinations of possible values (S12) and storing a corresponding data set or the result of an evaluation of the dataset (S14),
    - determining the values of the parameters during the journey for at least one current driving situation (S16),
    - checking during the journey whether the respective values of parameters determined for the current driving situation correspond (S18) to a defined combination of possible values for this parameter for possible driving situations,
    - allocating the chronological course calculated of at least one property of a defined possible driving situation to the current vehicle (10) driving situation during the journey, if the current respective values of the parameter determined for the current driving situation correspond (S20) to the combination given of possible values for the majority of the parameters for this fixed possible driving situation,
    - setting the value of at least one of the parameters as a control variable which is allocated to a vehicle chassis (10) during the journey, wherein this value is set as a control variable for which a number of possible driver situations dependent on the defined target function of the parameters are calculated by means of a majority of the chronological courses of at least one property in each case for a combination of possible values for the majority of parameters, at an extreme level, by varying the value set as the control variable whilst keeping all other values of parameters constant.

2. Process according to Claim 1, **characterised in that** the chronological progress of a sideslip angle of the vehicle (10) and/or the chronological course of a yaw rate (10) are calculated as the chronological course of one of the properties.

3. Process according to Claim 1 or 2, **characterised in that** the chronological courses calculated of at least one property with their combination of values of parameters allocated to them prior to the journey can be divided into at least two different groups.

**4.** Process according to Claim 3, **characterised in that** those chronological courses of at least one property are assigned to one of the groups which describe an unstable state of driving behaviour of the vehicle (10), and wherein those chronologically calculated courses of at least one of the properties can be allocated into at least one other group, which describes a stable condition of driving behaviour for the vehicle (10).

**5.** Process according to one of the above claims, **characterised in that** a boundary value is calculated prior to the journey by means of the chronological courses calculated for least one defined parameter, which gives the remaining parameters for a defined combination with the remaining values given for at least one defined driving situation, at which value for this defined parameter in the defined combination with the remaining values given of the remaining parameters for this defined driving situation the condition of the vehicle (10) passes from a stable state to an unstable state.

**6.** Process for setting one of the vehicle (10) control values allocated to a chassis of the vehicle (10), in which a control unit of a vehicle dynamics management system in the vehicle (10) automatically sets the control value in order to stabilise the driving behaviour of the vehicle (10), if the stability of the driving behaviour of the vehicle (10) is in at least one defined condition, wherein checking the state of driving behaviour stability for the vehicle (10) and setting the control value in a process according to one of the Claims 1 to 5 takes place.

**7.** Processes according to Claim 6, **characterised in that** the target function is defined in such a way that the requirement for maintaining or restoring a state in the vehicle as far as possibly removed from an unstable state and the requirement for converting a driver wish into the target function are adopted as far as possible with respective settable weighting factors.

**8.** Process according to Claim 6 or 7, **characterised in that** the target function is defined in such a way that the requirement for achieving a stable state as quickly as possible is also taken into consideration.

**9.** Process according to one of Claims 6 to 8, **characterised in that** the control variable is a rear wheel steering angle or contains a rear wheel steering angle.

**10.** Vehicle (10) with means (12, 14, 16, 18) to determine values for a number of parameters describing a driving situation (S10), wherein the parameters are the initial conditions required for a model-based calculation of stability of vehicle (10) driving behaviour, as well as with at least one control unit (20) which in the current vehicle (10) driving situation sets at least one value of one of the parameters as the control variable, wherein the control unit (20) has a memory (26) via which at least one chronological course of at least one property calculated before the journey, or the result of an evaluation of this calculated course of at least one of the properties, by means of which the stability of vehicle (10) driving behaviour can be described for a majority of possible driving situations, as well as a number of parameters attributed to this combination of values can be stored as data, and wherein the control unit (20) is designed in such a way that it takes the stored data into consideration when setting the control variable, wherein current values for the parameters are calculated using the means (12, 14, 16, 18) for determining values for a majority of the parameters and that the control unit (20) is designed to

- receive these current values,
- examine whether respective combinations from possible respective values for value of a parameter to be set by the control unit (20) in each case correspond with the remaining current values for the remaining parameters stored for a defined possible driving situation,
- allocate at least one defined property in each case of the respective combinations to a calculated chronological route in each case, if the respective combinations of possible values for the value of one of the parameters to be set by the control unit (20) correspond to the stored combination of values of parameters for the remaining, current values for the remaining parameters for a defined possible driving situation,
- set such a value as the control variable, for which a defined target function for a majority of possible driving situations dependant on the parameters, calculated using a majority of the chronological courses of at least one of the variables in each case for a combination of possible values of a majority of parameters at the extreme level, by varying the value which can be set as a control value and keeping all other values of parameters constant.

**Revendications**

**1.** Procédé servant à surveiller une stabilité du comportement routier d'un véhicule automobile (10), **caractérisé par** des étapes qui suivent consistant à :

- définir, avant un trajet, des situations de conduite envisageables en indiquant des combinaisons de valeurs envisageables pour une multitude de grandeurs de détermination, qui décrivent une situation de conduite (S10), dans lequel les grandeurs de détermination sont des conditions initiales requises pour un calcul, sur la base d'un modèle, de la stabilité,

- calculer, avant le trajet, une évolution temporelle d'au moins une grandeur d'état, au moyen de laquelle la stabilité du comportement routier du véhicule automobile (10) peut être décrite, pour les situations de conduite envisageables à l'aide des combinaisons respectives de valeurs envisageables (S12) et mémoriser un jeu de données correspondant ou un résultat d'une analyse du jeu de données (S14),

- déterminer, au cours du trajet, les valeurs des grandeurs de détermination pour au moins une situation de conduite instantanée (S16),

- contrôler au cours du trajet si les valeurs respectives, déterminées pour la situation de conduite instantanée, des grandeurs de détermination correspondent à une combinaison, indiquée pour une situation de conduite déterminée des situations de conduite envisageables, des valeurs envisageables pour lesdites grandeurs de détermination (S18),

- associer, au cours du trajet, l'évolution temporelle calculée de la ou des grandeurs d'état d'une situation de conduite déterminée des situations de conduite envisageables, à la situation de conduite instantanée du véhicule automobile (10) lorsque les valeurs respectives, déterminées pour la situation de conduite instantanée, des grandeurs de détermination correspondent à la combinaison, indiquée pour ladite situation de conduite déterminée envisageable, des valeurs envisageables pour la pluralité de grandeurs de détermination (S20),

- régler, au cours du trajet, une valeur au moins d'une des grandeurs de détermination en tant que grandeur de réglage, qui est associée à un châssis d'un véhicule automobile (10), dans lequel ladite valeur précisément est réglée en tant que grandeur de réglage, pour laquelle une fonction cible définie pour une pluralité de situations de conduite envisageables en fonction des grandeurs de détermination, et calculée à l'aide d'une multitude d'évolutions temporelles de la ou des grandeurs d'état respectivement pour une combinaison des valeurs envisageables pour la multitude de grandeurs de détermination, est extrême, en présence d'une variation de la valeur, qui est réglée en tant que grandeur de réglage, en maintenant toutes les autres valeurs des grandeurs de détermination constantes.

2. Procédé selon la revendication 1,
**caractérisé en ce**
**que** sont calculés, en tant qu'évolution temporelle d'une grandeur d'état, l'évolution temporelle d'un angle de flottement du véhicule automobile (10) et/ou l'évolution temporelle d'un taux d'embardée du véhicule automobile (10).

3. Procédé selon l'une quelconque des revendications 1 ou 2,
**caractérisé en ce**
**que** les évolutions temporelles calculées de la ou des grandeurs d'état sont réparties, avec la combinaison, qui leur est associée, de valeurs pour les grandeurs de détermination, avant le trajet, en au moins deux groupes différents.

4. Procédé selon la revendication 3,
**caractérisé en ce que**
sont réparties, dans l'un des groupes, précisément les évolutions temporelles calculées de la ou des grandeurs d'état, lesquelles décrivent un état non stable du comportement routier du véhicule automobile (10), et dans lequel sont réparties, dans au moins un autre groupe, précisément les évolutions temporelles calculées de la ou des grandeurs d'état, lesquelles décrivent un état stable du comportement routier du véhicule automobile (10).

5. Procédé selon l'une quelconque des revendications précédentes,
**caractérisé en ce**
**qu'**est calculée, avant le trajet, à l'aide des évolutions temporelles calculées pour au moins une grandeur de détermination déterminée des grandeurs de détermination, une valeur limite, qui indique, pour une combinaison déterminée avec les valeurs restantes indiquées pour une situation de conduite déterminée, des grandeurs de détermination restantes, la valeur à laquelle l'état du véhicule automobile (10) passe d'un état stable dans un état non stable pour ladite grandeur de détermination déterminée dans la combinaison déterminée avec les valeurs restantes, indiquées pour la situation de conduite déterminée, des grandeurs de détermination restantes.

6. Procédé servant à régler une grandeur de réglage, associée à un châssis d'un véhicule automobile (10), du véhicule automobile (10), une unité de commande d'un système de régulation de la dynamique de conduite du véhicule

**EP 2 380 791 B1**

automobile (10) réglant en fonctionnement automatiquement la grandeur de réglage afin de stabiliser le comportement routier du véhicule automobile (10) quand une stabilité du comportement routier du véhicule automobile (10) est dans au moins un état déterminé, dans lequel une vérification de l'état de la stabilité du comportement routier du véhicule automobile (10) et le réglage de la grandeur de réglage sont effectués dans un procédé selon l'une quelconque des revendications 1 à 5.

7. Procédé selon la revendication 6,
**caractérisé en ce**
**que** la fonction cible est définie de telle sorte que le critère visant un maintien ou un rétablissement d'un état du véhicule automobile aussi éloigné que possible d'un état instable et le critère visant la transposition aussi large que possible d'un souhait du conducteur en la fonction cible vont de pair avec des facteurs de poids pouvant être respectivement spécifiés.

8. Procédé selon la revendication 6 ou 7,
**caractérisé en ce**
**que** la fonction cible est définie de telle sorte que le critère visant l'obtention aussi rapide que possible de l'état le plus stable est également pris en compte.

9. Procédé selon l'une quelconque des revendications 6 à 8,
**caractérisé en ce**
**que** la grandeur de réglage est un angle de braquage de roue arrière ou comprend un angle de braquage de roue arrière.

10. Véhicule automobile (10) comprenant des moyens (12, 14, 16, 18) servant à déterminer des valeurs pour une multitude de grandeurs de détermination, qui décrivent une situation de conduite (S10), dans lequel les grandeurs de détermination sont des conditions initiales requises pour un calcul basé sur un modèle d'une stabilité du comportement routier du véhicule automobile (10), comprenant également au moins une unité de commande (20), qui règle, dans une situation de conduite instantanée du véhicule automobile (10), au moins une valeur d'une des grandeurs de détermination en tant que grandeur de réglage, dans lequel l'unité de commande (20) présente une mémoire (26), laquelle permet de mémoriser en tant que données au moins une évolution temporelle calculée avant le trajet ou un résultat d'une analyse de ladite évolution temporelle calculée d'au moins une grandeur d'état, au moyen de laquelle la stabilité du comportement routier du véhicule automobile (10) peut être décrite, pour une multitude de situations de conduite envisageables ainsi qu'une combinaison qui lui est associée de valeurs d'une multitude de grandeurs de détermination, et dans lequel l'unité de commande (20) est configurée afin de tenir compte des données mémorisées lors du réglage de la grandeur de réglage, dans lequel des valeurs instantanées pour les grandeurs de détermination sont déterminées par les moyens (12, 14, 16, 18) servant à déterminer des valeurs pour une multitude de grandeurs de détermination, et l'unité de commande (20) étant configurée afin

- de recevoir lesdites valeurs instantanées,
- de contrôler si des combinaisons respectives composées de valeurs respectives envisageables pour la valeur à régler par l'unité de commande (20) d'une des grandeurs de détermination avec respectivement les valeurs restantes instantanées pour les grandeurs de détermination restantes correspondent à une combinaison, mémorisée pour une situation de conduite déterminée envisageable, de valeurs des grandeurs de détermination,
- d'associer respectivement une combinaison déterminée des combinaisons respectives à une évolution temporelle calculée respective de la ou des grandeurs d'état, lorsque les combinaisons respectives composées des valeurs envisageables pour la valeur à régler par l'unité de commande (20) d'une des grandeurs de déterminations et des valeurs restantes instantanées pour les grandeurs de détermination restantes correspondent à une combinaison, mémorisée pour une situation de conduite déterminée envisageable, de valeurs des grandeurs de détermination,
- de régler pour la grandeur de réglage précisément la valeur, pour laquelle une fonction cible définie pour une pluralité de situations de conduite envisageables en fonction des grandeurs de détermination, calculée à l'aide d'une multitude des évolutions temporelles de la ou des grandeurs d'état respectivement pour une combinaison des valeurs envisageables pour la multitude de grandeurs de détermination, est extrême, en présence d'une variation de la valeur, qui peut être réglée en tant que grandeur de réglage, en maintenant constantes toutes les autres valeurs des grandeurs de détermination.

FIG.1

FIG.2

S10 bis S14

vor einer Fahrt

- - - - - - - - - - - - - - - - - - - - - - - - - - - - - - - - - - - - - - - - - - - -

während einer Fahrt

Bestimmen einer
aktuellen Fahrsituation — S16

Prüfen:

aktuelle Fahrsituation
mit verschiedenen Werten
für die einstellbare Größe
=
gespeicherte
Fahrsituation ? — S22

nein

ja

Auswählen eines Wertes
für die einstellbare Größe — S24

Einstellen des ausgewählten Wertes — S26

FIG.3

FIG.4

FIG.5

FIG.6

FIG.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004006944 A1
- DE 102006025904 A1